# EUROPEAN PATENT SPECIFICATION

(11) **EP 4 669 470 B1**
(45) Date of publication and mention of the grant of the patent: **02.12.2026**
(21) Application number: 24703823.5
(22) Date of filing: 13.02.2024
(51) Int. Cl.: B05B 15/18, G01M 99/00, G06F 30/20, B05B 1/00, B05B 13/02

(54) **AUTOMATIC NOZZLE TESTER**
AUTOMATISCHE DÜSENPRÜFVORRICHTUNG
TESTEUR AUTOMATIQUE DE BUSES

(30) Priority: 20.02.2023 EP 23157626
(43) Date of publication of application: 31.12.2025
(73) Proprietor: NV Bekaert SA, 8550 Zwevegem (BE)
(72) Inventor: SOKA, Martin, 92041 Leopoldov (SK); SIMONART, Alain, 8570 Vichte (BE); BRUGGEMAN, Tim, 8501 Heule (BE); MOUTON, Kristof, 8770 Ingelmunster (BE); VERKINDEREN, Dominiek, 9790 Wortegem-Petegem (BE)
(86) International application number: PCT/EP2024/053639
(87) International publication number: WO 2024/175427

(56) References cited:
- CN-U- 204 479 289
- CN-Y- 201 025 463
- JP-A- H0 949 471
- KR-A- 20020 014 572

## Description

### Technical Field

The invention relates to a device to measure the pressure distribution of a gas inside a nozzle and to a method to measure the pressure distribution of a gas inside a nozzle

### Background Art

A nozzle is a device designed to control the direction or characteristics of a fluid flow, specially to increase velocity, as it exits or enters an enclosed chamber or pipe.

A nozzle is often a pipe or tube of varying cross sectional area, and it can be used to direct or modify the flow of a fluid (liquid or gas). Nozzles are frequently used to control the rate of flow, speed, direction, mass, shape, and/or the pressure of the stream that emerges from them. In a nozzle, the velocity of fluid increases at the expense of its pressure energy.

Different types of nozzles exist, using a gas or a liquid as a fluid, or a combination of gas and liquid. Nozzles can be used as e.g. injectors, sprays, knifes in many applications such as e.g. cooling, cleaning, painting or wiping.

Several systems exist to measure the pressure of a fluid at the exit of a nozzle. Such systems are used to optimize the design of a nozzle, or to check its efficiency.

KR20020014572A discloses a method and device for measuring the pressure of injection nozzle. The apparatus comprises a movable table, which measures the pressure of the air and liquid being injected from a nozzle, and moves in both vertical and horizontal directions by the result of the measurement.

When nozzles are used for wiping a liquid with a gas on an elongated element, or when nozzles are used to spray a liquid or a gas around an elongated element e.g. for cooling, the elongated element is usually running inside the nozzle. Uniform pressure distribution around the elongated element is desired. The shape and section area of the elongated element influences the gas pressure distribution and needs to be accounted for.

JP H09 49471 A discloses a method of detecting a spray characteristic in a fuel injection device of a fuel injection valve or the like used for internal combustion engine.

### Disclosure of Invention

The present invention is particularly suitable for cooling nozzles or wiping nozzles, which are placed around an elongated element. Examples of such nozzles can be nozzles blowing compressed gas around an elongated element to remove excess liquid. Such type of nozzles can be used for drying a steel wire exiting a rinsing bath containing an aqueous solution, or to solidify a coating. Examples of coatings can be polymer coatings after extrusion, or paints, or metallic coatings obtained by hot dip processes.

It is a first object of the invention to provide a device to measure the pressure distribution of a gas inside a nozzle.

The device comprises:
- One or more gas supplies. The supplied gas can be air, helium, oxygen, carbon dioxide, argon or nitrogen. Preferably the gas is compressed air or nitrogen. When more than one gas supply is used, different gases can be provided to the different gas supplies, allowing mixing of gases inside a nozzle.
- Proportional valves and flow meters are used to control the flow of the gas in each supply. The gas flow varies between 0.01 and 15m³/h.
- A rotatable and moveable measuring probe is connected to a pressure sensor. The measuring probe is designed with a specific shape to simulate the elongated element running inside the nozzle. In contrast with prior art devices, having the probe itself simulating an elongated element inside the nozzle provides a more realistic pressure distribution measurement, i.e. closer to the real process conditions.

Therefore, the measuring probe can have a circular section to simulate a cylindrical elongated element to be wiped by the nozzle, such as a wire, rod, bar, tube or pipe. The measuring probe can have a non-circular section, e.g. a rectangular or triangular, or oval section to simulate a profiled elongated element to be wiped by the nozzle, such as a oval, flat or triangular wire, or a profiled wire, e.g. a U-profiled wire. The measuring probe comprises a hole with a diameter between 0.1mm and 0.5mm to collect the gas to be measured. The position of the collecting hole may vary if the probe has a non-circular section that is not symmetric.

To limit the dimensions of the device, the measuring probe has preferably a section area between 1mm² and 200 mm². For example, a probe with a circular section has preferably an external diameter between 1.1mm and 16mm.

A nozzle holder is used to keep the tested nozzle in place.

A plate or tape or a recipient containing liquid such as water can be placed under the nozzle.

Step motors are used in combination with a digital controller to position the measuring probe inside the tested nozzle. A digital controller can be a computer. The measuring probe can be moved in the vertical axis direction and can rotate around the vertical axis.

Test data comprise time, nozzle identification and description, supplied gas type and flow, measured gas pressure and nozzle position (angle, height). Test data is collected with any usual mean to collect data, such as a data acquisition card, or directly via a cable linked to a network or a computer.

A computer is used to store and analyse the collected data. The computer may be a programmable logic controller (PLC) integrated to the device, or external (e.g. desktop or laptop) or distant and connected to the device via a server.

With the collected data the device generates 3D mapping of the pressure distribution of a gas inside a nozzle.

It is a second object of the invention to provide a method to measure the pressure distribution of a gas inside a nozzle with the device described above. The method comprises the steps:
Positioning a nozzle on the nozzle holder;
Selecting a probe of equivalent diameter and shape similar to the elongated element to be simulated;
Setting up the start position by positioning the probe hole at a distance L0 from the bottom of the nozzle;
Supplying compressed gas at a flow between 0.01 and 15m³/h to the nozzle;
Rotating the probe from 0 to 360° in steps chosen in the range between 1 and 359°, preferably between 10° and 90°, e.g. 15° or 30° or 45°;
Moving the probe in the vertical direction by steps chosen in the range between 0.1mm and 10mm, e.g. 0.2mm or 0.5mm or 1mm or 2mm or 5mm;
At each rotation or movement in the vertical direction of the probe, recording the pressure measured by the pressure sensor;
Providing data to the data acquisition mean: nozzle description, L0, gas low, time, rotation angle, vertical position, measured gas pressure
Plotting in 3D the measured gas pressure as a function of the probe position (angle, vertical position)
Calculating the total wiping power, the absolute factor and the maximum vertical pressure gradient.

The total wiping power is obtained by selecting the maximum pressure at each angular position of the measuring probe inside the nozzle, and calculating the average of those maximum pressures.

The absolute factor is a ratio between the highest and the lowest maximum gas pressures measured in different angular directions. To calculate the absolute factor, the maximum gas pressure measured at each angular position of the measuring probe inside the nozzle is averaged for all vertical positions of the measuring probe inside the nozzle. The highest value of all averages is divided by lowest value of all averages. This gives the absolute factor. The inverse of the absolute factor is giving a ratio of pressure centricity. For instance an absolute factor of 2 indicates 50% pressure centricity.

The local vertical pressure gradient is calculated at each vertical position of the measuring probe, i, as dP/dzᵢ:$dP / dzi = \left({P}_{i + 1} - {P}_{i}\right) / \left({d}_{height}\right)$
where d_{height} is the step between two measuring points i and i+1 in the vertical direction z. The maximum local vertical pressure gradient,
max(dP/dzᵢ) is averaged for all angular positions. In a way similar to the absolute factor, the highest value of all averages divided by the lowest value of all averages is defined as the maximum vertical pressure gradient (dP/dz)ₘₐₓ. This value gives indication about the wiping capability of the nozzle.

### Brief Description of Figures in the Drawings

FIG. 1. Detailed view of the device of the invention
FIG. 2. Schematic representation of a nozzle and a measuring probe
FIG. 3. 3D plot of the measured gas pressure as a function of the probe position
FIG. 4. 2D projections of the measured gas pressure in 2 different nozzles

### Mode(s) for Carrying Out the Invention

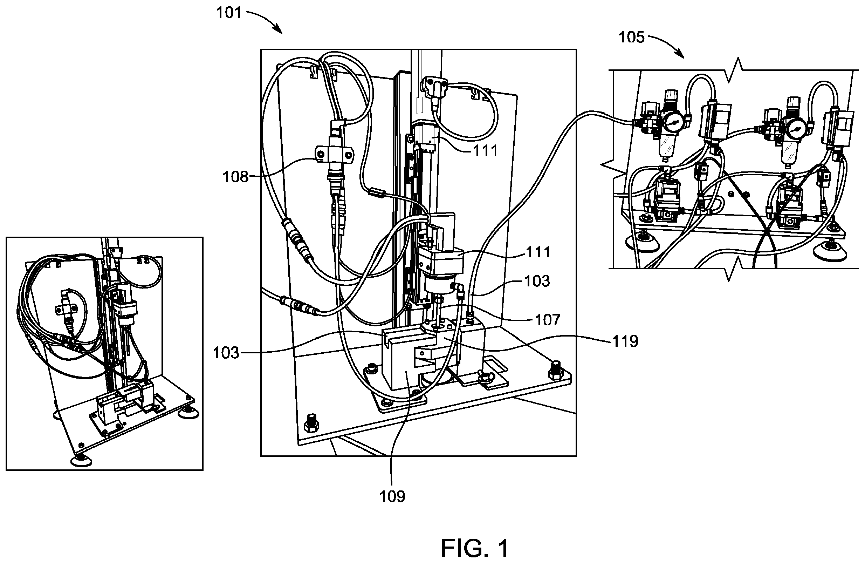

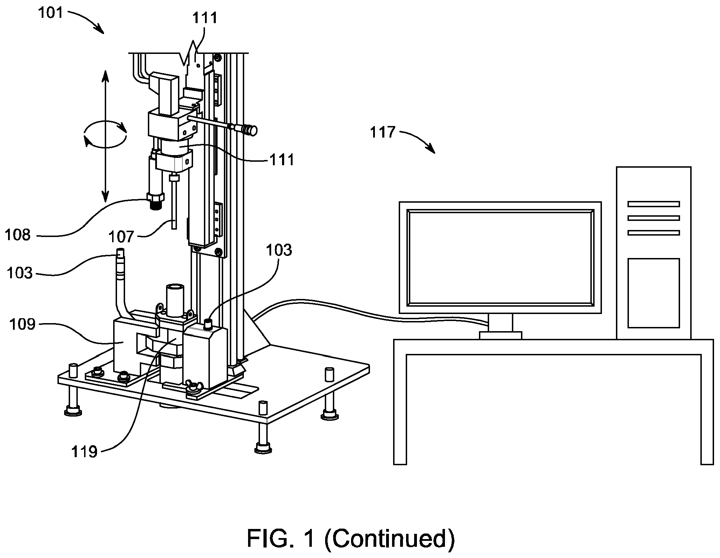

FIG. 1. shows the device of the invention.

In the present example, the device 101 comprises:
Two gas supplies 103, both connected to proportional valves and flow meters 105. Both supplies can be used independently and with different types of gas.

A rotatable and moveable probe 107 is connected to a pressure sensor 108. This probe is moved by step motors 111 in vertical direction and rotated around the vertical axis. A digital controller (not represented) sends information to the step motors. The step motors can also be controlled by a computer 117.

A nozzle holder 109 firmly keeps the nozzle 119 to be tested in place.

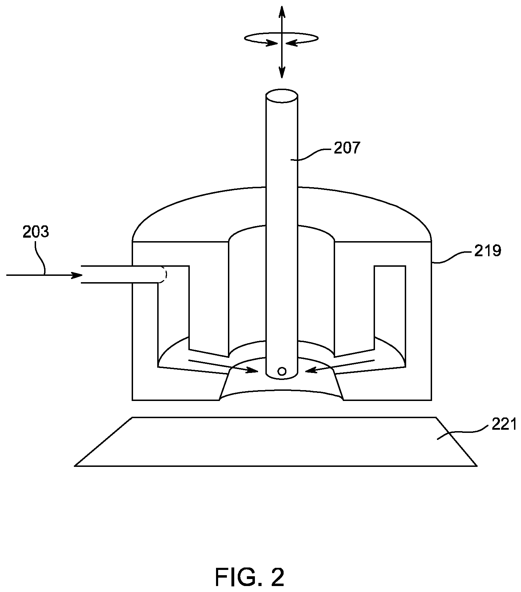

FIG. 2. is a close-up view of a nozzle 219. The holder is not represented. In the illustrative examples, compressed air is used and is supplied to the nozzle via the gas supply 203. A bottom plate or a recipient filled with a liquid can be placed under the nozzle holder to simulate a distance between the nozzle and e.g. a liquid metal bath. In some of the present illustrative examples a plate 221 was placed under the nozzle to be tested.

The measuring probe 207 is positioned inside the nozzle by controlling the step motors. In the illustrative examples the measuring probe comprises a hole with a diameter of 0.5mm to collect the compressed air pressure to be measured. The starting "home" position L0 is preferably defined as the position where the small hole on the measuring probe is aligned with the bottom of the nozzle. The reference position can also be the nozzle knife or any other preferred position. The starting position L0 can be stored in the device to allow automatic positioning.

Before starting the measurement the nozzle description needs to be entered in the device. This can be done with a computer 117 connected to the device. The gas flow can be set between 0.01m³/h and 15m³/h independently for both gas supplies 103.

The step motors can be configured according to the desired resolution of the pressure scan. The resolution of the pressure scan is determined by the rotation steps and the vertical displacement steps of the measuring probe, and by the sample rate.

The rotation of the measuring probe can be configured in steps between 1° and 359°, preferably in steps between 10° and 90°, for example 15° or 30° or 45°. The motor rotation speed can be adjusted to a percentage of its maximal rotation speed, e.g. 50%.

The vertical displacement of the measuring probe can be configured in steps between 0.1mm and 10mm, for example 0.2mm or 1mm.

The sample rate can be selected in a range between 1 and 1000 s⁻¹. This is the number of measurements per second at a given position. The duration of the measurement at each position can also be selected between 1s and 100s.

As an example, a nozzle has been selected and placed on the nozzle holder, with a 0.5mm thickness plate at a distance of 1mm from the bottom of the nozzle.

One gas supply was used with a flow rate 4m³/h. Pressure was measured by the pressure sensor connected to the probe with a sample rate 100s⁻¹ and a duration of 2s per position. The probe was moved in the vertical direction with steps of 0.2mm. The probe was rotated around the vertical direction with steps of 10°.

The pressure measured at each position was recorded and stored in the connected computer and a 3D graph was plotted with the collected data.

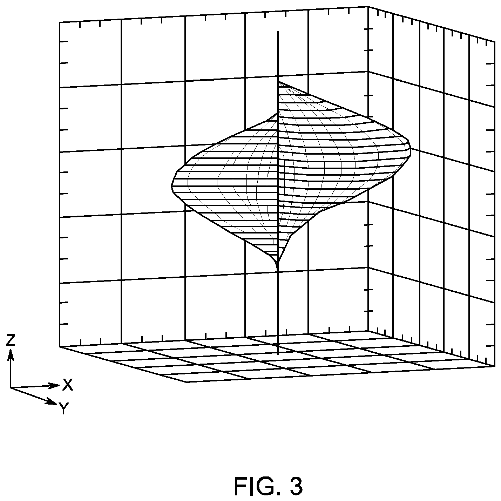

Figure 3 is an example of 3D plot of the pressure distribution inside the tested nozzle. In that particular example it can be seen that the pressure distribution is not symmetric, due to wear of the inside of the nozzle.

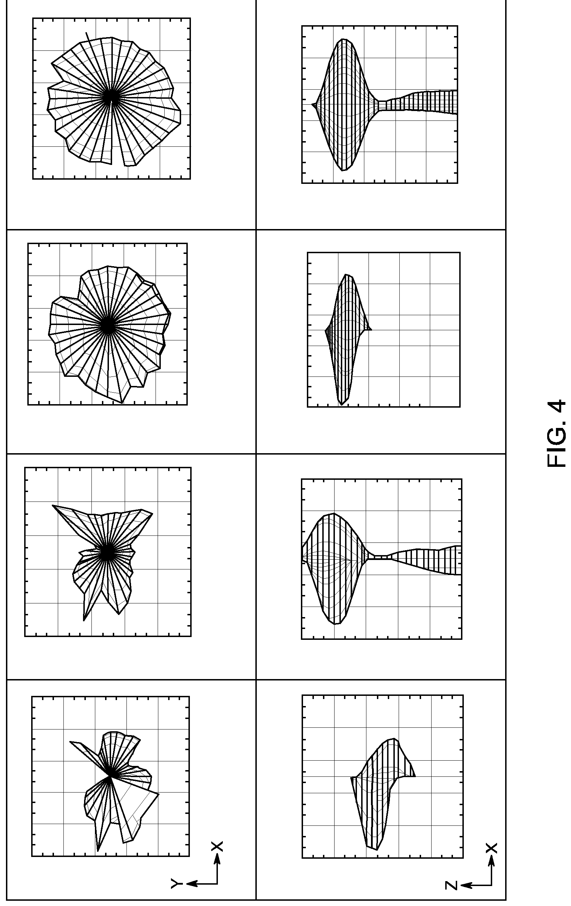

Figure 4 shows projections of the pressure measurements in the X-Y and X-Z planes for 2 different nozzles with and without a plate at the bottom.

From left to right, figure 4 shows the pressure measurement results with a flow of 4m³/h inside:
- an old nozzle without plate at the bottom;
- the same old nozzle with a 0.5mm plate at 1mm from the bottom;
- a new nozzle without plate at the bottom;
- the same new nozzle with a 0.5mm plate at 1mm from the bottom.

A convenient way to compare the efficiency of different nozzles is to use the absolute factor. The absolute factor is a ratio between the highest and the lowest maximum gas pressures measured in different angular directions.

A value of 1 for the absolute factor means that the pressure is uniformly distributed. Therefore a "good" nozzle should have the lowest possible absolute factor.

In the examples of figure 4, the old nozzle has an absolute factor of 36.7 without the plate and 4.8 with the plate, while the new nozzle has an absolute factor of 1.9 without the plate and 1.4 with the plate.

Another way to compare different nozzles is the maximum vertical pressure gradient (dP/dz)ₘₐₓ. The maximum vertical pressure gradient is a ratio between the highest and the lowest maximum gas pressures measured in different heights.

In the examples of figure 4, the maximum vertical pressure gradient is calculated to be (from left to right) 3.68, 5.48, 17.32 and 5.41 respectively. The higher maximum vertical pressure gradient indicates a superior local wiping capability.

### List of Reference Numbers

- 101: Device
- 103, 203: Gas supplies
- 105: Proportional valves and flow meters
- 107, 207: Rotatable and moveable probe
- 108: Pressure sensor
- 109: Nozzle holder
- 111: Step motors
- 117: Computer
- 119, 219: Nozzle
- 221: Plate or tape at the bottom of the nozzle

## Claims

1. A device (101) to measure the pressure distribution of a gas inside a nozzle, said device comprising:
- a first gas supply (103)
- proportional valves and flow meters (105) connected to the first gas supply (103)
- a rotatable and moveable measuring probe (107) connected to a pressure sensor (108)
- a nozzle holder (109)
- step motors (111) to control the displacement and rotation of said rotatable and moveable measuring probe (107)
- a digital controller to control the step motors and gas flow
- data acquisition mean
- a computer
**characterized in that**
said rotatable and moveable measuring probe is arranged to be positioned inside a nozzle to measure the pressure inside said nozzle at different positions, such that said device can generate 3D mapping of the pressure distribution of a gas inside said nozzle.

2. A device according to claim 1 further comprising one or more additional gas supplies.

3. A device according to claim 2 wherein the gas supplied to the first gas supply is different from the gas supplied to one or more additional gas supplies.

4. A device according to any of the preceding claims wherein the measuring probe is rotating around the vertical axis from 0 to 360° in steps between 1° and 359°and moving along the vertical axis by steps between 0.1mm and 10mm.

5. A device according to any of the preceding claims wherein the gas flow varies between 0.01 and 15m³/h.

6. A device according to any of the preceding claims further comprising a plate or tape at the bottom of the nozzle.

7. A device according to any of the preceding claims wherein the measuring probe has a circular section to simulate a cylindrical elongated element to be wiped inside the nozzle.

8. A device according to any of claims 1-6 wherein the measuring probe has a non-circular section, e.g. a rectangular or triangular, or oval section to simulate a profiled elongated element to be wiped inside the nozzle.

9. A device according to claims 7 or 8 wherein the probe has a section area between 1mm² and 200mm².

10. A device according to any of claims 1-6 wherein the supplied gas is air, or nitrogen, or oxygen, or helium, or argon, or carbon dioxide.

11. A method to measure the pressure distribution of a gas inside a nozzle with the device according to claims 1 or 2 comprising the steps:
- Positioning a nozzle on the nozzle holder;
- Selecting a probe of equivalent diameter and shape similar to the elongated element to be simulated;
- Setting up the start position by positioning the probe hole at a distance L0 from the bottom of the nozzle;
- Supplying compressed gas at a flow between 0 and 15m³/h to the nozzle;
- Rotating the probe from 0 to 360° in steps chosen in the range between 1° and 359°;
- Moving the probe in the vertical direction by steps chosen in the range between 0.1mm and 10mm;
- At each rotation or movement in the vertical probe, recording the pressure measured by the pressure sensor;
- Providing data to the data acquisition card: nozzle description, L0, gas flow, time, rotation angle, vertical position, measured gas pressure at each probe position;
- Sending data to a computer.

12. A method as in claim 11 further comprising the step:
- Plotting in 3D the measured gas pressure as a function of the probe position.

13. A method as in claim 11 or 12 further comprising the step:
- Calculating a total wiping power by selecting the maximum pressure at each angular position of the measuring probe inside the nozzle, and calculating the average of those maximum pressures.

14. A method as in claim 11 or 12 further comprising the step:
- Calculating an absolute factor as defined by the ratio between the highest and the lowest maximum gas pressures measured in different angular directions.

15. A method as in claim 11 or 12 further comprising the step:
- Calculating a maximum vertical pressure gradient as defined by the ratio between the highest and the lowest maximum gas pressures measured in different heights.

## Patentansprüche

1. Vorrichtung (101), um die Druckverteilung eines Gases innerhalb einer Düse zu messen, die Vorrichtung umfassend:
- eine erste Gaszufuhr (103)
- Proportionalventile und Durchflussmesser (105), die mit der ersten Gaszufuhr (103) verbunden sind
- eine drehbare und bewegliche Messsonde (107), die mit einem Drucksensor (108) verbunden ist
- einen Düsenhalter (109)
- Schrittmotoren (111), um die Verschiebung und die Drehung der drehbaren und beweglichen Messsonde (107) zu steuern
- eine digitale Steuerung, um die Schrittmotoren und den Gasfluss zu steuern
- Datenerfassungsmittel
- einen Computer
**dadurch gekennzeichnet, dass**
die drehbare und bewegliche Messsonde angeordnet ist, um innerhalb einer Düse positioniert zu werden, um den Druck innerhalb der Düse an verschiedenen Positionen derart zu messen, dass die Vorrichtung eine 3D-Kartierung der Druckverteilung eines Gases innerhalb der Düse erzeugen kann.

2. Vorrichtung nach Anspruch 1, ferner umfassend eine oder mehrere zusätzliche Gaszufuhren.

3. Vorrichtung nach Anspruch 2, wobei das Gas, das der ersten Gaszufuhr zugeführt wird, von dem Gas, das der einen oder den mehreren zusätzlichen Gaszufuhren zugeführt wird, verschieden ist.

4. Vorrichtung nach einem der vorstehenden Ansprüche, wobei sich die Messsonde um die vertikale Achse von 0 bis 360° in Schritten zwischen 1° und 359° dreht und sich entlang der vertikalen Achse in Schritten zwischen 0,1 mm und 10 mm bewegt.

5. Vorrichtung nach einem der vorstehenden Ansprüche, wobei der Gasdurchfluss zwischen 0,01 und 15 m³/h variiert.

6. Vorrichtung nach einem der vorstehenden Ansprüche, ferner umfassend eine Platte oder ein Band an der Unterseite der Düse.

7. Vorrichtung nach einem der vorstehenden Ansprüche, wobei die Messsonde einen kreisförmigen Abschnitt aufweist, um ein zylindrisches längliches Element zu simulieren, das innerhalb der Düse abgewischt werden soll.

8. Vorrichtung nach einem der Ansprüche 1 bis 6, wobei die Messsonde einen nicht kreisförmigen Abschnitt aufweist, z. B. einen rechteckigen oder dreieckigen oder ovalen Abschnitt, um ein profiliertes längliches Element zu simulieren, das innerhalb der Düse abgewischt werden soll.

9. Vorrichtung nach Anspruch 7 oder 8, wobei die Sonde eine Abschnittsfläche zwischen 1 mm² und 200 mm² aufweist.

10. Vorrichtung nach einem der Ansprüche 1 bis 6, wobei das zugeführte Gas Luft, oder Stickstoff, oder Sauerstoff, oder Helium, oder Argon, oder Kohlendioxid ist.

11. Verfahren, um die Druckverteilung eines Gases innerhalb einer Düse mit der Vorrichtung nach Anspruch 1 oder 2 zu messen, umfassend die Schritte:
- Positionieren einer Düse auf dem Düsenhalter;
- Auswählen einer Sonde mit äquivalentem Durchmesser und einer Form ähnlich dem zu simulierenden länglichen Element;
- Einrichten der Startposition durch Positionieren des Sondenlochs in einem Abstand L0 von der Unterseite der Düse;
- Zuführen von Druckgas mit einem Durchfluss zwischen 0 und 15 m³/h zu der Düse;
- Drehen der Sonde von 0 bis 360° in Schritten, die in dem Bereich zwischen 1° und 359° ausgewählt sind;
- Bewegen der Sonde in der vertikalen Richtung in Schritten, die in dem Bereich zwischen 0,1 mm und 10 mm ausgewählt sind;
- bei jeder Drehung oder Bewegung in der vertikalen Sonde, Aufzeichnen des Drucks, der durch den Drucksensor gemessen wird;
- Bereitstellen von Daten an die Datenerfassungskarte: Beschreibung der Düse, L0, Gasdurchfluss, Zeit, Drehwinkel, vertikale Position, gemessener Gasdruck an jeder Sondenposition;
- Senden von Daten an einen Computer.

12. Verfahren nach Anspruch 11, ferner umfassend den Schritt:
- Auftragen des gemessenen Gasdrucks in 3D in Abhängigkeit der Sondenposition.

13. Verfahren nach Anspruch 11 oder 12, ferner umfassend den Schritt:
- Berechnen einer Gesamtwischleistung durch Auswählen des maximalen Drucks an jeder Winkelposition der Messsonde innerhalb der Düse und Berechnen des Durchschnitts dieser maximalen Drücke.

14. Verfahren nach Anspruch 11 oder 12, ferner umfassend den Schritt:
- Berechnen eines absoluten Faktors, der durch das Verhältnis zwischen dem höchsten und dem niedrigsten maximalen Gasdruck definiert ist, die in verschiedenen Winkelrichtungen gemessen werden.

15. Verfahren nach Anspruch 11 oder 12, ferner umfassend den Schritt:
- Berechnen eines maximalen vertikalen Druckgradienten, der durch das Verhältnis zwischen dem höchsten und dem niedrigsten maximalen Gasdruck definiert ist, die in verschiedenen Höhen gemessen werden.

## Revendications

1. Dispositif (101) permettant de mesurer la distribution de pression d'un gaz à l'intérieur d'une buse, ledit dispositif comprenant :
- une première alimentation en gaz (103)
- des vannes proportionnelles et des débitmètres (105) raccordés à la première alimentation en gaz (103)
- une sonde de mesure rotative et mobile (107) raccordée à un capteur de pression (108)
- un porte-buse (109)
- des moteurs pas à pas (111) pour commander le déplacement et la rotation de ladite sonde de mesure rotative et mobile (107)
- un dispositif de commande numérique pour commander les moteurs pas à pas et le débit de gaz
- un moyen d'acquisition de données
- un ordinateur
**caractérisé en ce que**
ladite sonde de mesure rotative et mobile est agencée pour être positionnée à l'intérieur d'une buse pour mesurer la pression à l'intérieur de ladite buse à différentes positions, de sorte que ledit dispositif puisse générer une cartographie 3D de la distribution de pression d'un gaz à l'intérieur de ladite buse.

2. Dispositif selon la revendication 1, comprenant en outre une ou plusieurs alimentations en gaz supplémentaires.

3. Dispositif selon la revendication 2, dans lequel le gaz fourni à la première alimentation en gaz est différent du gaz fourni à une ou plusieurs alimentations en gaz supplémentaires.

4. Dispositif selon l'une quelconque des revendications précédentes, dans lequel la sonde de mesure tourne autour de l'axe vertical de 0 à 360° par pas compris entre 1° et 359° et se déplace le long de l'axe vertical par pas compris entre 0,1 mm et 10 mm.

5. Dispositif selon l'une quelconque des revendications précédentes, dans lequel le débit de gaz varie entre 0,01 et 15 m³/h.

6. Dispositif selon l'une quelconque des revendications précédentes, comprenant en outre une plaque ou un ruban au fond de la buse.

7. Dispositif selon l'une quelconque des revendications précédentes, dans lequel la sonde de mesure a une section circulaire pour simuler un élément allongé cylindrique à essuyer à l'intérieur de la buse.

8. Dispositif selon l'une quelconque des revendications 1 à 6, dans lequel la sonde de mesure a une section non circulaire, par exemple une section rectangulaire ou triangulaire, ou ovale, pour simuler un élément allongé profilé à essuyer à l'intérieur de la buse.

9. Dispositif selon la revendication 7 ou 8, dans lequel la sonde a une aire de section comprise entre 1 mm² et 200 mm².

10. Dispositif selon l'une quelconque des revendications 1 à 6, dans lequel le gaz fourni est de l'air, ou de l'azote, ou de l'oxygène, ou de l'hélium, ou de l'argon, ou du dioxyde de carbone.

11. Procédé pour mesurer la distribution de pression d'un gaz à l'intérieur d'une buse avec le dispositif selon la revendication 1 ou 2, comprenant les étapes consistant à :
- positionner une buse sur le porte-buse ;
- sélectionner une sonde de diamètre équivalent et de forme similaire à l'élément allongé à simuler ;
- régler la position de départ en positionnant le trou de la sonde à une distance L0 du fond de la buse ;
- fournir du gaz comprimé à un débit compris entre 0 et 15 m³/h à la buse ;
- Tourner la sonde de 0 à 360° par pas choisis dans la plage comprise entre 1° et 359° ;
- déplacer la sonde dans la direction verticale par pas choisis dans la plage comprise entre 0,1 mm et 10 mm ;
- à chaque rotation ou mouvement dans la sonde verticale, enregistrer la pression mesurée par le capteur de pression ;
- fournir des données à la carte d'acquisition de données : description de la buse, L0, débit de gaz, temps, angle de rotation, position verticale, pression de gaz mesurée à chaque position de sonde ;
- envoyer des données à un ordinateur.

12. Procédé selon la revendication 11, comprenant en outre l'étape consistant à :
- tracer en 3D la pression de gaz mesurée en fonction de la position de sonde.

13. Procédé selon la revendication 11 ou 12 comprenant en outre l'étape consistant à :
- calculer une puissance d'essuyage totale en sélectionnant la pression maximale à chaque position angulaire de la sonde de mesure à l'intérieur de la buse, et calculer la moyenne de ces pressions maximales.

14. Procédé selon la revendication 11 ou 12 comprenant en outre l'étape consistant à :
- calculer un facteur absolu tel que défini par le rapport entre la pression maximale de gaz la plus élevée et la pression maximale de gaz la plus basse mesurées dans différentes directions angulaires.

15. Procédé selon la revendication 11 ou 12 comprenant en outre l'étape consistant à :
- calculer un gradient de pression vertical maximal tel que défini par le rapport entre la pression maximale de gaz la plus élevée et la pression maximale de gaz la plus basse mesurées à différentes hauteurs.
